## Europäisches Patentamt

## European Patent Office

## Office européen des brevets

(11) Veröffentlichungsnummer: **0 011 238**
**B1**

(12) **EUROPÄISCHE PATENTSCHRIFT**

(19)

(45) Veröffentlichungstag der Patentschrift:
05.05.82

(21) Anmeldenummer: **79104384.7**

(22) Anmeldetag: **08.11.79**

(51) Int. Cl.³: **C 03 B 33/04,** G 05 B 19/19

(54) **Kreuzschlitten-Vorrichtung zum Aufspielen eines Steuerprogramms für eine Modell-Glasschneidemaschine mit X-Y-Bahnsteuerung auf einen Impulsspeicher, und ihre Verwendung.**

(30) Priorität: **18.11.78 DE 2850127**

(43) Veröffentlichungstag der Anmeldung:
**28.05.80 Patentblatt 80/11**

(45) Bekanntmachung des Hinweises auf die Patenterteilung:
**05.05.82 Patentblatt 82/18**

(84) Benannte Vertragsstaaten:
**BE CH DE FR GB IT LU NL**

(56) Entgegenhaltungen:
**DE-A-1 638 029**
**DE-A-2 646 053**
**DE-A-2 646 062**
**DE-B-1 596 389**
**DE-B-1 959 672**

(73) Patentinhaber: **SAINT-GOBAIN INDUSTRIES, 62, Bd Victor Hugo, F-92209 Neuilly sur Seine (FR)**
(84) Benannte Vertragsstaaten: **BE CH FR GB IT LU NL**

(73) Patentinhaber: **Vereinigte Glaswerke GmbH, Viktoriaallee 3-5, D-5100 Aachen (DE)**
(84) Benannte Vertragsstaaten: **DE**

(72) Erfinder: **Reinmold, Heinz-Josef, Schervierstrasse 6, D-5100 Aachen (DE)**
Erfinder: **Audi, Josef, Kronenberg 61, D-5100 Aachen (DE)**

(74) Vertreter: **Biermann, Wilhelm, Dr.-Ing., Compagnie de Saint-Gobain-Pont-A-Mousson Zweigniederlassung Deutschland Postfach 14 90 Oppenhoffallee 143, D-5100 Aachen (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Kreuzschlitten-Vorrichtung zum Aufspielen eines Steuerprogramms für eine Modell-Glasschneidemaschine mit X-Y-Bahnsteuerung auf einen Impulsspeicher, und ihre Verwendung

Die Erfindung betrifft eine Kreuzschlitten-Vorrichtung zum Aufspielen eines Steuerprogramms für eine Modell-Glasschneidemaschine mit X-Y-Bahnsteuerung auf einen Impulsspeicher anhand einer Vorlage, über die ein Abtastkopf geführt wird, bei der ein Rotationsimpulsgeber für die X-Achse an der entlang den X-Koordinatenschienen verfahrbaren Brücke des Kreuzschlittens, und ein Rotationsimpulsgeber für die Y-Achse an dem entlang der die Y-Koordinate darstellenden Brücke verfahrbaren Schlitten jeweils an einer um eine senkrechte Schwenkachse verschwenkbaren Halterung angeordnet sind, wobei zum Antrieb der Impulsgeber auf deren Rotationsachsen angeordnete Antriebsrollen vorgesehen sind, die in Wirkverbindung mit den Koordinatenschienen stehen und so angetrieben werden.

Eine Vorrichtung dieser Art ist aus der DE-A-1 638 029 bekannt. Bei dieser bekannten Vorrichtung sind die Antriebsrollen auf den Rotationsachsen der Impulsgeber als Ritzel ausgebildet, die mit entlang den Koordinatenschienen angeordneten Zahnstangen kämmen. Die Impulsgeber sind auf einer Halterung angeordnet, die um eine senkrechte Achse schwenkbar ist, und die nach Lösen einer Feststellschraube mit Hilfe eines Handgriffs verschwenkt werden kann, wodurch der Zahneingriff des Ritzels in der Zahnstange wahlweise gelöst bzw. hergestellt werden kann.

Bei dieser bekannten Vorrichtung ist durch die Zahnverbindung ein festes Übersetzungsverhältnis von der Zahnstange auf den Rotationsimpulsgeber vorgegeben. Zwar kann man die Wirkverbindung des Ritzels mit der Rotationsachse des Impulsgebers lösen, und könnte gegebenenfalls auch das Ritzel gegen ein anderes Ritzel mit einer anderen Anzahl von Zähnen auswechseln. Jedoch ist es mit dieser Vorrichtung nicht möglich, kleine Veränderungen in der Übersetzung zwischen der Koordinatenschiene und dem Impulsgeber vorzunehmen. Die Möglichkeit, auch kleine Veränderungen der Übersetzung vorzunehmen, kann aber aus verschiedenen Gründen erwünscht sein, so z.B. wenn man ein Schneidprogramm speichern will, das in einer oder in beiden Achsen von der Vorlage geringfügig abweichen soll.

Der Erfindung liegt dementsprechend die Aufgabe zugrunde, eine Vorrichtung der eingangs genannten Art so auszugestalten, dass unter Beibehaltung einer schlupffreien Wirkverbindung zwischen der Antriebsrolle und der damit zusammenwirkenden Koordinatenschiene geringe Veränderungen der Übersetzung zwischen der Koordinatenschiene und dem Rotationsimpulsgeber möglich sind.

Gemäss der Erfindung wird diese Aufgabe dadurch gelöst, dass die zylindrischen oder kegelförmigen Antriebsrollen als Permanent- oder Elektromagnete ausgebildet sind und die mit den Antriebsrollen zusammenwirkenden Schienen aus ferromagnetischem Werkstoff bestehen, und dass die Halterung der Rotationsimpulsgeber um die senkrechte Schwenkachse frei schwenkbar ist.

Durch die erfindungsgemässe Ausgestaltung der Vorrichtung wird einerseits auch ohne Zahnverbindung eine schlupffreie Wirkverbindung zwischen den Koordinatenschienen und den Antriebsrollen durch die Magnetkraft sichergestellt. Diese wirkt über die Antriebsrollen unmittelbar auf die Achse der Impulsgeber, so dass jeder Druck auf die Lager der Rotationsgeber entfällt, wodurch die Lebensdauer der Lager sowie die Genauigkeit des Programms erhöht werden. Andererseits erlaubt die Ausbildung der Antriebsrollen als zylindrische oder konische Rotationskörper mit glatter Mantelfläche eine beliebig feinstufige Veränderung des Übersetzungsverhältnisses zwischen der Koordinatenschiene und dem Impulsgeber, bei zylindrischen Rollen durch Austauschen der Antriebsrolle gegen eine andere Antriebsrolle mit geringfügig anderem Durchmesser, und bei konischen Antriebsrollen durch geringfügige Verschiebung der Rolle in Achsrichtung, so dass die Antriebsrolle mit einer anderen Umfangslänge mit der Koordinatenschiene in Wirkverbindung steht.

Die Erfindung ermöglicht es, die Anzahl der den zurücklegenden Weg bestimmenden Impulse gezielt zu erhöhen oder zu verringern, wodurch die vom Schneidwerkzeug des Schneidautomaten in einer oder in beiden Richtungen zurückzulegende Strecke im Vergleich zu der Vorlage gezielt verlängert oder verkürzt werden kann. Dadurch wird es möglich, durch Dehnung der Zahnriemen des Schneidautomaten bedingte Wegabweichungen zu korrigieren, indem bei festgestellter Abweichung von der Vorlage das Programm mit einer Antriebsrolle mit anderem Durchmesser neu aufgespielt wird. Da die in Frage kommenden Schneidautomaten meist in einer Richtung eine wesentlich grössere Ausdehnung haben als in der anderen, sind die durch Dehnung der Zahnriemen bedingten Abweichungen der beiden Koordinaten in ihrem Absolutwert unterschiedlich. Dieser Mangel kann auf einfache und wirkungsvolle Weise dadurch behoben werden, dass auf den beiden Impulsgebern Antriebsrollen verschiedener Durchmesser angeordnet werden, deren Durchmesser jeweils so gewählt wird, dass dadurch die jeweils festgestellte Abweichung kompensiert wird.

Durch Austauschen der Antriebsrollen gegen solche mit grösserem oder kleinerem Durchmesser können auf einfache Weise Schneidprogramme erstellt werden, für Glasscheiben, die in einer oder in beiden Dimensionen von der Vorlage um ein gewünschtes Mass abweichen. Auf diese Weise kann man z.B. mit einer geringeren Anzahl an Vorlagen eine grössere Anzahl verschiedener Modelle schneiden.

Besondere Vorteile ergeben sich beim Schneiden eines Scheibenpaares, das gebogen und anschliessend zu einer Verbundglasscheibe, beispielsweise zu einer Windschutzscheibe für Kraftfahrzeuge, weiterverarbeitet werden soll. Wenn z.B. eine Verbundglasscheibe mit zylindrischer Biegung hergestellt werden soll, muss die auf der konvexen Seite angeordnete Einzelscheibe in der gebogenen Richtung länger sein als die auf der konkaven Seite angeordnete Glasscheibe. Hierfür werden beim Stand der Technik zwei verschiedene Vorlagen benötigt. Bei einer anderen, aus der DE-AS 2 603 167 bekannten Technik wird hierfür zwar nur eine Vorlage benötigt, doch ist zum Erstellen des Schneidprogramms für die grössere Scheibe eine komplizierte elektronische Recheneinrichtung erforderlich. Gemäss der Erfindung wird das gewünschte Ergebnis auf einfache Weise dadurch erreicht, dass die Antriebsrolle für die eine Koordinate gegen eine Antriebsrolle mit kleinerem Durchmesser ausgetauscht wird.

Weitere zweckmässige Ausgestaltungen der Erfindung ergeben sich aus den Unteransprüchen und aus der nachfolgenden Beschreibung eines bevorzugten Ausführungsbeispiels der Erfindung, das in den Zeichnungen dargestellt ist. Von den Zeichnungen zeigt

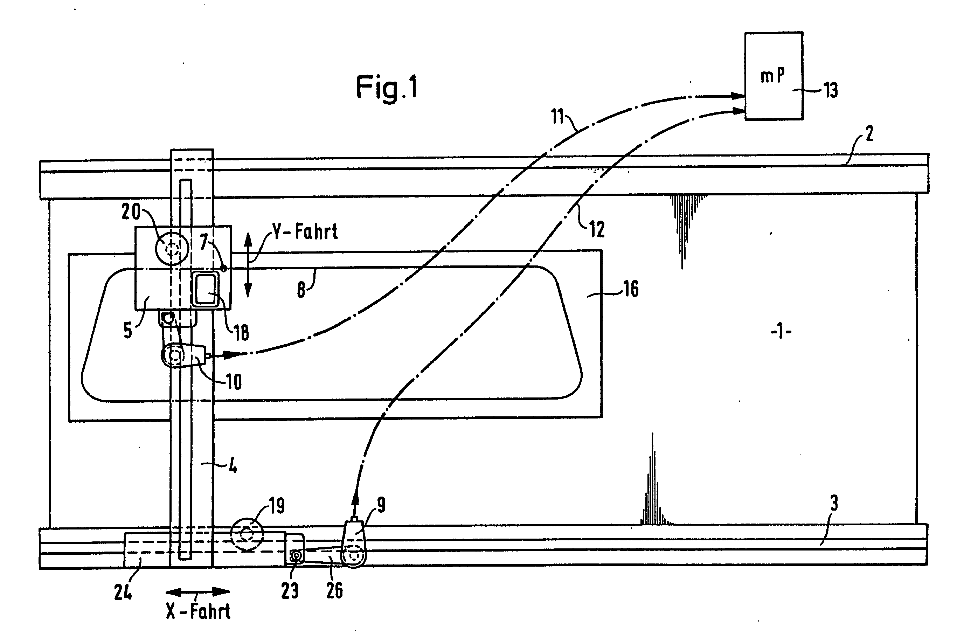

Fig. 1 eine Gesamtdarstellung einer Programmiereinheit in der Draufsicht;

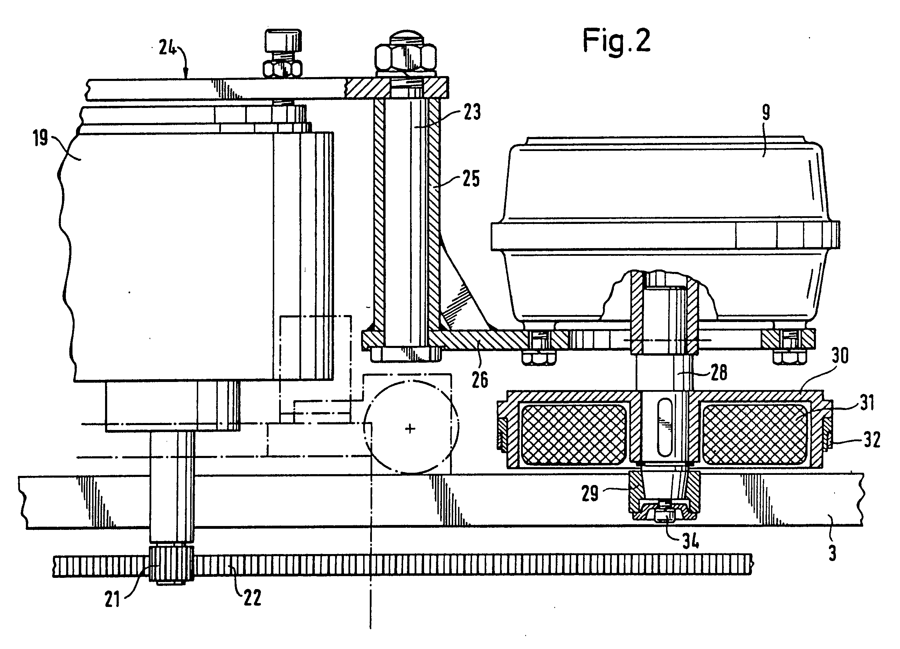

Fig. 2 eine teilweise im Schnitt dargestellte Seitenansicht einer Impulsgebereinheit mit zylindrischer Antriebsrolle, und

Fig. 3 eine vertikal verstellbare Impulsgebereinheit mit konischer Antriebsrolle.

Die Programmiervorrichtung umfasst eine Tischplatte 1, auf den beiden Längsseiten dieser Tischplatte angeordnete Koordinatenschienen 2, 3, die entlang der Koordinatenschienen 2, 3 in der X-Richtung verfahrbare Brücke 4, und den Schlitten 5, der entlang der Brücke 4 in der Y-Richtung verfahrbar ist.

An dem Schlitten 5 ist ein Abtastkopf 7 angeordnet. Dieser Abtastkopf 7 wird entlang der zu programmierenden Linie 8 geführt. Die dabei ausgeführte Bewegung des Schlittens 5 wird auf die beiden Rotations-Impulsgeber 9 und 10 übertragen. Die von diesen Impulsgebern 9 und 10 gelieferten Wegsignale werden über die schematisch angedeuteten Leitungen 11, 12 dem Speicher 13 zugeführt.

Die Speichervorrichtung 13 umfasst einen Mikroprozessor u. ein Magnetbandaufnahmegerät, wobei das Magnetband den eigentlichen Speicher darstellt. Der Mikroprozessor hat dabei die Funktion, die von den Impulsgebern kommenden Signale so umzuformen, dass die auf dem Magnetband gespeicherten Signale sich dafür eignen, das Schneidprogramm später über ein Magnetbandwiedergabegerät in einen Wiedergabe-Mikroprozessor einzuspielen, d.h. den Speicher dieses Wiedergabe-Mikroprozessors zu laden.

Der Speicher des Wiedergabe-Mikroprozessors muss hinsichtlich seiner Kapazität so ausgelegt sein, dass er alle auf dem Magnetband vorhandenen Weg- und Geschwindigkeitsinformationen aufnehmen kann. Der in der Speicherrichtung 13 zum Aufspielen des Schneidprogramms auf das Magnetband benötigte Mikroprozessor hingegen benötigt nur einen relativ kleinen Speicher, da er nicht das gesamte Schneidprogramm, sondern nur immer einen Block von beispielsweise acht Weg- und Geschwindigkeitssignalen an das Magnetband weitergeben muss.

Die Umrisslinie 8 der zu programmierenden Scheibenform kann in jeder geeigneten Form vorgegeben werden. In ihrer einfachsten Form ist die Umrisslinie 8 als Zeichnung auf einer Zeichnungsunterlage 16, beispielsweise einer Folie oder einem Zeichenkarton, aufgebracht.

Der Schlitten 5 kann von Hand über die Umrisslinie 8 geführt werden. Es ist jedoch auch möglich, ein automatisches Kurvensteuergerät einzusetzen. Solche automatischen Kurvensteuergeräte, die mit einer photoelektrischen Abtasteinrichtung arbeiten, sind bekannt (z.B. DE-C-1 563 770) und im Handel erhältlich. Im vorliegenden Fall ist eine automatische Wegsteuerung entlang der Umrisslinie 8 schematisch dargestellt. Sie umfasst das auf dem Schlitten 5 angeordnete Kurvensteuergerät 18, den Antriebsmotor 19 für die Bewegung der Brücke 4 in der X-Richtung und den Antriebsmotor 20 für die Bewegung des Schlittens 5 in der Y-Richtung, d.h. entlang der Brücke 4. Das Steuergerät 18 führt den Abtastkopf 7 entlang der Kurve 8, indem eine elektronische Auswerteeinheit die entsprechenden Weginformationen an die Antriebsmotoren 19, 20 gibt. Die Antriebsmotoren 19, 20 sind mit Antriebsritzeln 21 versehen, die mit parellel zu den Koordinatenschienen 3 bzw. 4 angeordneten Zahnstangen 22 kämmen.

Der Rotations-Impulsgeber 9 ist über die senkrechte Achse 23 an dem die Brücke 4 tragenden Führungswagen 24 frei drehbar angelenkt. Die um die Achse 23 drehbare Buchse 25 trägt eine Montageplatte 26, auf der der eigentliche Rotationsimpulsgeber 9, der mitsamt der erforderlichen elektronischen Signalverarbeitungsstufe in einem gemeinsamen Gehäuse untergebracht und als solcher im Handel erhältlich ist, angeordnet ist.

Auf der Antriebswelle 28 des Rotationsimpulsgebers 9 ist die zylindrische Antriebsrolle 29 aus ferromagnetischem Material angeordnet, die sich gegen die als Laufschiene ausgebildete Koordinatenschiene 3 seitlich anlegt. Zur Erzeugung der zum Andrücken der Antriebsrolle 29 an die Schiene 3 erforderlichen Magnetisierung der Antriebsrolle 29 ist auf der Welle 28 oberhalb der Antriebsrolle 29 ein zylinderförmiger Käfig 30 mit einer darin untergebrachten Spule 31 angeordnet. Die Spule 31 des Elektromagneten wird über am Umfang des Käfigs 30 angeordnete Schleifringe 32 und über nicht dargestellte Schleifkontakte mit Strom versorgt.

Die Antriebsrolle 29 ist mit Hilfe der Schraube 34 auf der Welle 28 befestigt. Sie kann durch Lösen der Schraube 34 leicht entfernt und gegen eine andere Antriebsrolle mit einem grösseren oder kleineren Durchmesser ausgetauscht werden.

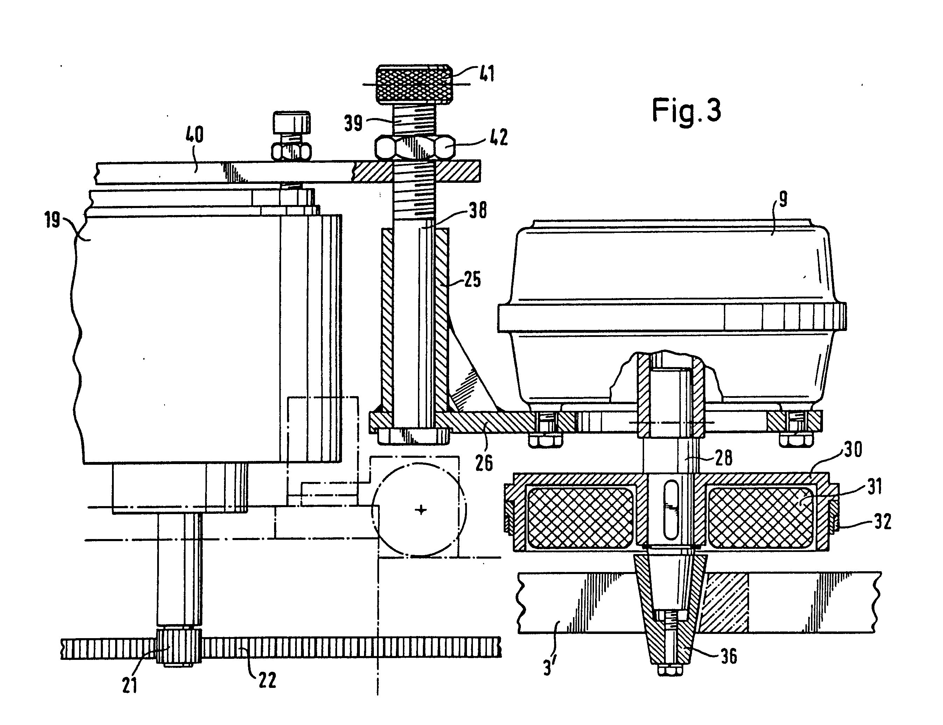

Fig. 3 zeigt eine Ausführungsform, bei der die auf der Welle 28 sitzende, sich gegen die Schiene 3 anlegende Antriebsrolle nicht ausgewechselt zu werden braucht, sondern infolge ihrer Gestalt bereits die Möglichkeit einer stufenlosen Veränderung der Umfangsgeschwindigkeit der Welle 28 gestattet. Die Antriebsrolle 36 ist konisch, d.h. kegelstumpfförmig ausgebildet. Die Koordinatenschiene 3' hat einen trapezförmigen Querschnitt, so dass die konische Antriebsrolle 36 sich auf der Kontaktseite auf der ganzen Höhe der Schiene gegen diese anlegt. Die Montageplatte 26 ist über die Buchse 25 auf der Achse 38 frei drehbar gelagert. Die Achse 38 ist im oberen Teil mit einem Gewinde 39 versehen, das in ein entsprechendes Gewinde in der Trägerplatte 40 eingeschraubt ist. Mit Hilfe des Rändelkopfes 41 kann die Achse 38 infolgedessen in der Höhe verstellt werden. Die Kontermutter 42 dient dazu, die Achse 38 in der gewünschten Stellung festzulegen.

## Patentansprüche

1. Kreuzschlitten-Vorrichtung zum Aufspielen eines Steuerprogramms für eine Modell-Schneidemaschine mit X-Y-Bahnsteuerung auf einen Impulsspeicher anhand einer Vorlage (16), über die ein Abtastkopf (7) geführt wird, bei der ein Rotationsimpulsgeber (9) für die X-Achse an der entlang den X-Koordinatenschienen verfahrbaren Brücke (4) des Kreuzschlittens, und ein Rotationsimpulsgeber (10) für Y-Achse an dem entlang die die Y-Koordinate darstellenden Brücke (4) verfahrbaren Schlitten jeweils an einer um eine senkrechte Schwenkachse verschwenkbaren Halterung angeordnet sind, wobei zum Antrieb der Impulsgeber (9, 10) auf deren Rotationsachsen angeordnete Antriebsrollen (29, 36) vorgesehen sind, die in Wirkverbindung mit den Koordinatenschienen (3, 3') stehen und so angetrieben werden, dadurch gekennzeichnet, dass die zylindrischen oder kegelförmigen Antriebsrollen (29, 36) als Permanent- oder Elektromagnete ausgebildet sind und die mit den Antriebsrollen (29, 36) zusammenwirkenden Schienen aus ferromagnetischem Werkstoff bestehen, und dass die Halterung (26) der Rotationsimpulsgeber (9, 10) um die senkrechte Schwenkachse (23) frei schwenkbar ist.

2. Vorrichtung nach Anspruch 1, dadurch gekennzeichnet, dass die Antriebsrollen (29) bei zylindrischer Ausführung gegen solche mit unterschiedlichem Durchmesser austauschbar sind.

3. Vorrichtung nach Anspruch 1, dadurch gekennzeichnet, dass die Antriebsrollen (36) die Form eines Konus bzw. Kegelstumpfes haben und durch relative vertikale Verschiebung der Antriebsrollen (36) zu den Koordinatenschienen (3') die Eingriffshöhe, und damit der für den Antrieb des Impulsgebers (9) massgebliche Durchmesser, veränderbar ist.

4. Vorrichtung nach Anspruch 1 bis 3, dadurch gekennzeichnet, dass die Oberfläche der Antriebsrollen (29, 36) zur Erhöhung des Reibungskoeffizienten aufgerauht ist.

5. Vorrichtung nach Anspruch 1 bis 4, dadurch gekennzeichnet, dass der Schlitten (5) mit dem Abtastkopf (7) von Hand über die zu programmierende Bahn (8) der Vorlage führbar ist.

6. Vorrichtung nach Anspruch 1 bis 4, dadurch gekennzeichnet, dass der Schlitten (5) mit einer Antriebsvorrichtung (19, 20) und mit einer automatischen Bahnabtasteinheit (18) versehen ist.

7. Vorrichtung nach Anspruch 6, dadurch gekennzeichnet, dass die automatische Bahnabtasteinheit (18) aus einem lichtelektrischen Kurvenfolger zum Abtasten einer als Zeichnung vorgegebenen Bahn ausgebildet ist.

8. Verwendung einer Vorrichtung nach einem der Ansprüche 1 bis 7 zum Aufspielen eines von der Vorlage in einer oder in beiden Dimensionen abweichenden Programms durch Veränderung des mit den Koordinatenschienen zusammenwirkenden Durchmessers der Antriebsrolle eines oder beider Impulsgebereinheiten.

9. Verwendung nach Anspruch 8 zum Aufspielen der beiden Schneidprogramme für ein zu einer gebogenen Verbundglasscheibe weiterzuverarbeitendes Scheibenpaar.

## Claims

1. A cross-slide apparatus for recording a control program for a pattern cutting machine with X Y contour control in a pulse store on the footing of an original (16), over which a feeler head (7) is guided, in the case of which a rotation pulse pickup (9) for the X axis is present on the bridge (4) able to be moved along the X axis, and a rotation pulse pickup (10) for the Y axis is present on the slide able to be moved along the bridge (4) representative of the Y coordinate, in each case on a support able to be turned about a vertical axis of turning, and for driving the pulse pickup (9, 10) driving wheels (29, 36) are present on their axes of turning, which are drivingly joined with the coordinate rails (3, 3') and are so turned by them, characterized in that the cylindrical or coned driving wheels (29, 36) take the form of permanent or electromagnets and the rails, used with the driving wheels (29, 36) are made of ferromagnetic material and in that the support (26) for the rotation pulse pickups (9, 10) is able to be freely turned about the vertical axis (23) of turning.

2. An apparatus as claimed in claim 1, characterized in that the driving wheels (29) may have their places taken by wheels with a different diameter in the case of a cylindrical design.

3. An apparatus as claimed in claim 1, characterized in that the driving wheels (36) have the form of a cone or truncated cone and by changing the position of the driving wheels (36) in relation to the coordinate rails (3') vertically, the height of connection and, for this reason, the diameter responsible for driving the pulse pickup (9) may be changed.

4. An apparatus as claimed in anyone of claims 1 to 3, characterized in that the outer face of the driving wheels (29, 36) is made rough for increasing the coefficient of friction.

5. An apparatus as claimed in anyone of claims 1 to 4, characterized in that the slide (5) may be moved together with the feeler head (7) by hand over the contour (8) to be programmed of the original.

6. An apparatus as claimed in anyone of claims 1 to 4, characterized in that the slide (5) has a driving system (19, 20) and an automatic contour-sensing unit (18).

7. An apparatus as claimed in claim 6, characterized in that the automatic contour-sensing unit (18) takes the form of a photo-electric curve follower for sensing a contour presented as a figure or drawing.

8. The use of an apparatus as claimed in anyone of claims 1 to 7 for recording a program which is different to an original in one or its two dimensions by changing the diameter, acting against the coordinate rails, of the driving wheel of one or the two pulse pickup units.

9. The use as claimed in claim 8, for recording the two cutting programs for two sheets of glass which are to be further processed for making a curved laminated glass structure.

**Revendications**

1. Dispositif de coulissement à mouvements croisés pour enregistrer un programme de commande pour une machine à découper selon modèle à guidage X-Y dans une mémoire d'impulsions au moyen d'un dessin-modèle (16) sur lequel une tête d'analyse (7) est guidée, comportant un générateur d'impulsions de rotation (9) pour l'axe des X monté sur la traverse (4) du dispositif de coulissement à mouvements croisés qui peut être déplacée le long des rails de coordonnées et un générateur d'impulsions de rotation (10) pour l'axe des Y monté sur le coulisseau qui peut être déplacé sur la traverse matérialisant les coordonnées Y, chacun sur un support pouvant pivoter autour d'un axe de pivotement vertical, des galets d'entraînement (29, 36) étant prévus sur les axes de rotation des générateurs d'impulsions en vue de les entraîner, étant en liaison active avec les rails de guidage (3, 3') et étant ainsi entraînés, caractérisé en ce que les galets d'entraînement cylindriques ou coniques (29, 36) ont la forme d'aimants permanents ou d'électro-aimants et les rails coopérant avec les galets d'entraînement (29, 36) sont faits d'une matière ferromagnétique, le support (26) du générateur d'impulsions de rotation (9, 10) pouvant pivoter librement autour de l'axe de pivotement vertical (23).

2. Dispositif suivant la revendication 1, caractérisé en ce que, lorsqu'ils ont une configuration cylindrique, les galets d'entraînement (29) peuvent être remplacés par des galets de diamètres différents.

3. Dispositif suivant la revendication 1, caractérisé en ce que les galets d'entraînement (36) ont la forme d'un cône ou d'un tronc de cône et permettent de modifier la hauteur d'attaque et ainsi le diamètre déterminant pour l'entraînement du générateur d'impulsions (9) par un déplacement vertical relatif des galets d'entraînement (36) par rapport aux rails de coordonnées (3').

4. Dispositif suivant les revendications 1 à 3, caractérisé en ce que la surface des galets d'entraînement (29, 36) est rendue rugueuse pour augmenter le coefficient de friction.

5. Dispositif suivant les revendications 1 à 4, caractérisé en ce que le coulisseau (5) portant la tête d'analyse (7) peut être guidé à la main sur le trajet (8) du dessin-modèle à programmer.

6. Dispositif suivant les revendications 1 à 4, caractérisé en ce que le coulisseau (5) est pourvu d'un dispositif d'entraînement (19, 20) et d'une unité d'analyse de trajet automatique (18).

7. Dispositif suivant la revendication 6, caractérisé en ce que l'unité d'analyse du trajet automatique (18) est formée d'un dispositif suiveur de courbes photo-électrique destiné à analyser un trajet établi sous la forme d'un dessin.

8. Procédé pour utiliser un dispositif suivant l'une quelconque des revendications 1 à 7 afin d'enregistrer un programme s'écartant du premier modèle dans l'une ou dans deux dimensions par modification du diamètre du galet d'entraînement coopérant avec les rails de guidage de l'un ou des deux générateurs d'impulsions.

9. Procédé suivant la revendication 8 pour enregistrer les deux programmes de découpe pour une paire de feuilles de verre qui, doivent subir un traitement ultérieur, pour former une feuille de verre feuilleté cintrée.

# Fig.1

mP  13

11

2

20

7

Y-Fahrt

12

8

16

5

18

-1-

10

4

19

9

3

24

23  26

X-Fahrt

7

0 011 238

Fig. 2

0 011 238

Fig.3